# EUROPEAN PATENT SPECIFICATION

(11) **EP 0 531 332 B1**
(45) Date of publication and mention of the grant of the patent: **15.11.1995**
(21) Application number: 91909411.0
(22) Date of filing: 24.05.1991
(51) Int. Cl.: H04B 17/00

(54) **RADIO TEST LOOP FOR A RADIO TRANSCEIVER**
FUNKTESTSCHLEIFE FÜR FUNKSENDER/EMPFÄNGER
BOUCLE D'ITERATION D'ESSAI DE RADIO POUR UN EMETTEUR-RECEPTEUR RADIO

(30) Priority: 25.05.1990 FI 902625
(43) Date of publication of application: 17.03.1993
(73) Proprietor: NOKIA TELECOMMUNICATIONS OY, 02601 Espoo (FI)
(72) Inventor: KATISKO, Keijo, SF-90500 Oulu (FI)
(74) Representative: Tomlinson, Kerry John
(86) International application number: FI9100164
(87) International publication number: WO9119365

(56) References cited:
- GB-A- 2 056 223
- US-A- 4 048 564
- US-A- 4 918 685

## Description

The invention relates to a device for looping a radio-frequency test signal transmitted by a transmitter section in a transceiver to a receiver section for testing the transceiver.

The specifications of the European mobile telephone system GSM (Groupe Special Mobile) define a test function in which a base station tests the operation of the radio sections of its transceiver by generating a test signal which is transmitted by the transmitter section and which is looped back to the receiver section.

The object of the invention is to provide a device forming a test loop of this type.

This is achieved by means of a device of the invention, which is characterized in that the device comprises mixing means for converting the test signal from a transmitting frequency to a receiving frequency; switching means connecting the test signal from the output of the mixing means to a device output and therethrough to the receiver section only during predetermined test intervals; and control means for supervising the operation of the switching means by monitoring the signal level in the device output.

To loop a test signal generated by the transmitter in an appropriate way to the receiver, the test signal should be converted over a duplex interval from the transmitting frequency to the receiving frequency. Preferably, the test signal is first demodulated from the transmitting frequency to a base frequency and then modulated from the base frequency to the receiving frequency.

In the invention, the interference caused by the test signal in the normal reception of the receiver is prevented by providing the device with switching means which separate the test signal from the input of the receiver between the test intervals or during malfunction of the device. Any switching means effecting sufficient separation or attenuation in the radio frequency range can be used as switching means. In the preferred embodiment of the invention, PIN diodes are used.

Due to damaging or malfunction of the switching means, however, the test signal may constantly interfere with the receiver also between the test intervals. This results in disturbances in the reception or, in the worst case, the receiver may get blocked and communication at the test signal frequency may be prevented. Therefore the device of the invention is provided with means for controlling the separation switches, which means monitor the signal at the device output behind the switches, thus preventing the generation of a transmitting-frequency test signal if the signal level at the device output exceeds a predetermined threshold value due to damage or malfunction of the switches. Such measuring of the absolute level of a signal leaking into the output is a clearly more reliable way of ensuring that the switches operate properly than e.g. the monitoring of the control current of the switches. The lacking of the control current does indicate that the switches probably do not operate properly, but the control current does not indicate a test signal leakage to the receiver due to damaged switches.

In the following the invention will be described in greater detail by means of exemplifying embodiments with reference to the attached drawings, in which
Figure 1 is a block diagram of a transceiver comprising a device of the invention; and
Figure 2 illustrates the principal features of the device of the invention by means of a schematic block diagram.

The purpose of the radio test unit of the invention is to enable a radio-frequency test signal generated by the transmitter section of a full duplex-type transceiver to be controlled in such a way that it is passed appropriately back to the receiver section of the same transceiver for reception and analyzing. In this way, a test loop is formed which contains at least the radio sections of the transceiver, possibly also the multiplexing means, etc. The condition and operation of the transceiver can be automatically observed by measuring the test performance and suitable properties of the received test signal passed through the test loop. In the following, the invention will be described in connection with a transceiver to be used at the base station of a cellular mobile radio telephone system, but the invention is not in any way restricted to this application.

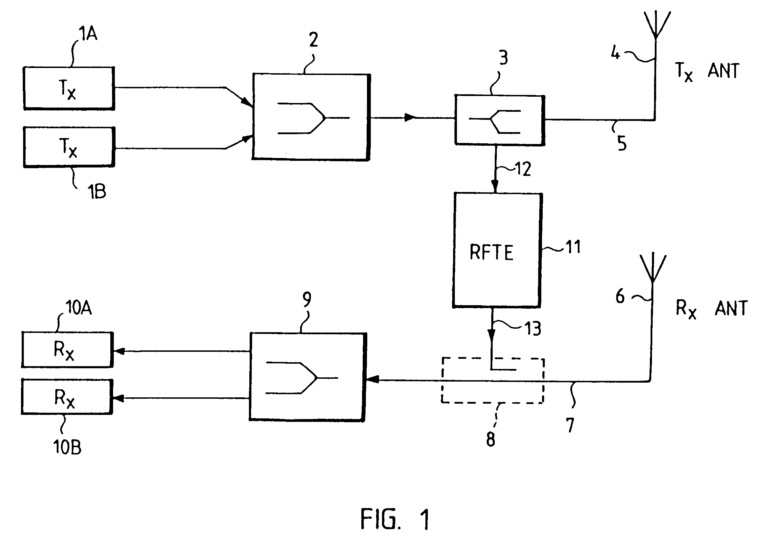

In Figure 1, the transceiver comprises at least two, preferably four, transmitter-receiver pairs 1A, 10A and 1B, 10B, respectively, whereby each pair forms one full duplex link. The outputs of the transmitter units 1A and 1B are coupled by means of a summing means 2 to a common antenna line 3 and to a common transmitting antenna 4. A receiving antenna 6 is coupled through an antenna line 7 to a branching device 9 which divides the received signal to the receiver units 10A and 10B. As used in this connection, the transmitter and receiver units refer primarily to the radio sections of the transceiver. Each transmitter and receiver unit has its own transmitting or receiving frequency, whereby the transmitting and receiving frequencies of units forming a full duplex pair, e.g., 1A and 10A, are positioned at a distance of one duplex interval from each other, e.g. 45 MHz. In addition, each frequency channel is TDMA time-division multiplexed so as to comprise several digital traffic and/or control channels. The GSM specification defines eight base frequencies for the base station, each divided into eight channel intervals.

In the preferred embodiment of the invention, a radio test unit 11 is coupled between the antenna lines 5 and 7. For this purpose, the antenna line 5 comprises a branching device 3 which branches a portion of the transmitted signal to an input 12 in the radio test unit 11. An output 13 in the radio test unit 11 is coupled to the antenna line 7 by means of a directional coupler 8 which applies an output signal from the radio test unit to the antenna line 7 in a direction towards the receiver units. Alternatively, the radio test unit can be e.g. coupled directly to the individual transmitter and receiver units.

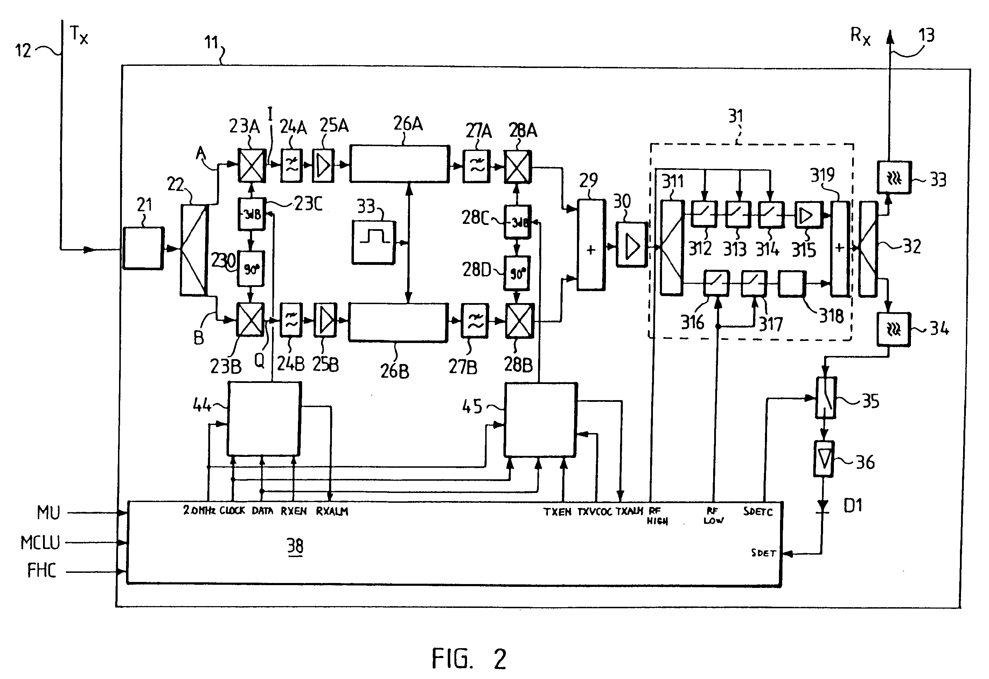

Figure 2 is a block diagram of the preferred embodiment of the radio test unit 11. From the input 12, a radio-frequency test signal, e.g. 800-1000 MHz, is applied through a fixed attenuator 21 to a branching device 22 which divides the signal to inputs A and B in a quadrature demodulator 23, whereby the signals at the inputs are mixed in mixers 23A and 23B by means of quadrature-phase local oscillator signals (a phase shift of 90 degrees) to a base frequency so as to form two quadrature-phase signals I and Q, the frequency range of which is between 0 and 100 kHz. The output signal I of the mixer 23A is applied through a lowpass filter 24A, an amplifier 25A, a delay line 26A, and a lowpass filter 27A to a mixer 28A in a quadrature modulator 28. Correspondingly, the output signal from the mixer 23B is applied through a lowpass filter 24B, an amplifier 25B, a delay line 26B and a lowpass filter 27B to a mixer 28B in the quadrature modulator 28. In the quadrature modulator 28, the signals I and Q are modulated by quadrature-phase local oscillator signals to the receiving frequency. The output signals of the mixers 28A and 28B are combined by a summing means 29 to form the final test signal, which is applied through an amplifier 30 to a switching unit 31, which under the guidance of a control unit 38 switches the test signal through it only during predetermined test intervals. From the switching unit 31, the test signal is applied to a branching device 32, which divides the signal to a signal level control branch and through a bandpass filter 33 to the output 13 of the radio test unit.

The purpose of the delay lines 26A and 26B is to delay the test signal before it is applied to the receiver for a period of time which corresponds to the time required between the transmission and reception of one line in the transceiver in question. In the GSM specifications, this time period is three channel intervals. The delay lines 26A and 26B are mutually identical. In the preferred embodiment of the invention, they are realized by a circuit based on analog sampling and charge offset, in which charges are transferred in synchronization with a clock signal generated by an oscillator 39. One suitable circuit is RD5108A, which is manufactured by Reticon Inc and in which there are 2048 charge storing means coupled in sequence. The signals I and Q are sampled during every other clock period and the samples pass from one charge storing means to another during every clock period. The magnitude of the delay is determined by the frequency of the oscillator 39, 1.216 MHz in this specific case, thus obtaining the above-mentioned delay of three channel intervals in conformity with the GSM system. The delayed signals I and Q at the outputs of the delay lines 26A and 26B are sampled analog signals, the spectra of which include the sampling frequency. This sampling frequency is removed by means of the lowpass filters 27A and 27B connected after the delay lines. Alternatively, the delay lines 26A and 26B may be realized digitally, whereby they comprise an analog-to-digital converter, a digital shift register and a digital-to-analog converter for both base-frequency signals.

In the preferred embodiment of the invention, the switching unit 31 has two primary functions: 1) to separate the test signal at the output of the modulator 28 sufficiently efficiently from the receiver between the test intervals, and 2) to set the initial level of the test signal to a desired value. Therefore, the input of the switching unit comprises a branching means 311 which divides the output signal of the amplifier 30 into two branches. The first branch comprises three switching means 312, 313 and 314 connected in series and an amplifier with constant gain, so that the gain of the branch is 15 dB. The other branch comprises two switching means 316 and 317 connected in series and a fixed attenuator 318, the attenuation of the branch being 15 dB. In the preferred embodiment of the invention, the difference in the power levels of signals passed through the different branches is thus 30 dB. The output signals of the attenuator 318 and the amplifier 315 are fed to a summing means 319, the output of which forms the output of the switching unit 31 coupled to the branching device 32. During the test interval, the control unit 38 causes the switching means 312 to 314 to be closed by a control signal RF HIGH or alternatively causes the switching means 316 to 317 to be closed by a control signal RF LOW so as to apply a receiving-frequency test signal to the receiver. Between the test intervals, the switching means of both branches are open, so that they separate the test signal from the input of the receiver. The choice of the power level of the branch and the test signal depends on whether it is the upper or lower end of the dynamic range of the receiver that is to be tested. The attenuation of open switching means within the radio frequency range has to be such that the level of a signal leaking through an open branch is at least 25 dB smaller than the signal level at the output of the selected branch. In the preferred embodiment of the invention, the switching means are realized by PIN diodes. The alternative power levels of the test signal may be formed by combinations of switches, amplifiers and attenuators different from that described above, provided that at least two alternative signal paths having different fixed attenuations or gains are achieved.

The level of the test signal leaking to the output of the radio test unit 11 is monitored by passing a portion of the output signal of the switching unit 31 by the branching device 32 to the power level control branch, in which the power level of the signal is measured. If the power level of the output signal between the test intervals exceeds a predetermined threshold level, the control unit 38 assumes that the switches are damaged or operate faultily and prevents the generation of the test signal by interrupting the supply of operating power to the oscillator 45, for instance. The power level control branch also monitors the level of the outpulled test signal during the test interval. If the power level of the test signal during the test does not exceed the predetermined threshold level, the control unit 38 assumes that the switching unit 31 has operated faultily and updates the error counter and/or disregards the loop test performed during this interval. In the preferred embodiment of the invention, the control branch comprises a series connection of the following components in the following order: a bandpass filter 34; a switching means 35 operating in its closed state as a 10 dB attenuator for protecting subsequent components; a rectifier formed by a diode D1; and a level measuring circuit, such as a comparator, positioned in the control unit 38. The control unit 38 causes the switching means 35 to open during the test intervals and close between the test intervals by a signal SDETC.

The local oscillator signals of the demodulator 23 are generated from the output signal of a frequency synthesizer 44 by feeding it to the mixer 23A with a phase shift of 0° and to the mixer 23B with a phase shift of 90°. Correspondingly, the local oscillator signals of the modulator 28 are formed by feeding the output signal of a frequency synthesizer 45 to the mixer 28A of the modulator 28 with a phase shift of 0° and to the mixer 28B with a phase shift of 90°.

During testing, the radio test unit receives a test signal from the transmitter unit 1 and transmits it further to the receiver section 2 either during every test interval within the same fixed frequency channel or, when the transceiver operates in the frequency hopping mode, by changing the physical frequency channel during each test interval. The operation of the frequency synthesizers is controlled and monitored by means of the control unit 38. During testing, the control unit 38 receives from some other component in the transceiver, e.g. from the frequency hopping unit, an absolute channel number for each test interval prior to the beginning of the test interval. Thereafter the control unit 38 generates command data from this absolute channel number for the synthesizers 44 and 45, on the basis of which data the output signals of the synthesizers are locked to a frequency corresponding to each particular channel. In the preferred embodiment of the invention, in which each frequency channel has eight channel intervals, the command data is applied to the synthesizers approximately 4ms, i.e. 7 intervals, before the test interval. In this way, it is ensured that the synthesizers 44 and 45 have a setting time of at least 3 ms before the test interval. About 0.5 ms before the beginning of the test interval, the control unit 38 monitors the states of alarm signals RXALM and TXALM of the synthesizers, which signals indicate whether the synthesizers 44 and 45 have locked or not. If both synthesizers have locked before the beginning of the test interval, the control unit 38 controls the switching unit 31 so that it connects the test signal to the output 13 for the test interval. If only one or neither one of the synthesizers 44 and 45 has locked before the beginning of the test interval, the control unit 38 does not close the switches of the switching unit 31 and the test signal will not be applied to the output 13, so that the interference of the receiver is prevented.

The control unit 38 contains several error counters for monitoring the operation of the radio test unit. Error counters to be updated include a frequency hopping command counter, synthesizer counters, switching unit counters and a counter for test intervals lost due to an error in the test unit during testing.

The correctness of the received channel number commands is controlled by means of the frequency hopping command counter. The control unit 38 receives the channel numbers from the transceiver in duplex form and checks that both channel numbers are identical and that they have the right parity. If this is not the case, the control unit updates the frequency hopping counter and does not generate command data to the synthesizers 44 and 45. In this way, the test interval in question is disregarded in the radio test unit and the counter for lost intervals is incremented.

A separate synthesizer counter is provided for each synthesizer, which counter is incremented if the synthesizer is not locked before the test interval and the test interval is disregarded. If the reading of the synthesizer counters exceeds a predetermined threshold value, the operation of the radio test unit stops wholly.

The switching unit counter is incremented if it is found out that the switches of the switching unit 31 have not closed or opened at the proper time during testing.

The figures and the description related to them are only intended to illustrate the present invention. In its details, the device of the invention may vary within the attached claims.

## Claims

1. Device for looping a radio-frequency test signal transmitted by a transmitter section (1A, 1B) in a transceiver to a receiver section (10A, 10B) for testing the transceiver, **characterized** in that the device comprises
mixing means (23, 28) for converting the test signal from a transmitting frequency to a receiving frequency;
switching means (31) connecting the test signal from the output of the mixing means (23, 28) to a device output (13) and therethrough to the receiver section (10A, 10B) only during predetermined test intervals; and
control means (D1, 35, 36, 38) for supervising the operation of the switching means (31) by monitoring the signal level in the device output.

2. Device according to claim 1, **characterized** in that the control means (38) prevent the operation of the mixing means (23, 28) when the signal level at the device output exceeds a predetermined threshold value between said test intervals.

3. Device according to claim 1 or 2, **characterized** in that the control means (38) detect malfunction of the switching means (31) during the test interval and thus the failure of the test when the signal level in the device output falls below a predetermined threshold value during the test interval.

4. Device according to claim 3, **characterized** in that the control means (38) comprise an error counter which is increased whenever the test fails.

5. Device according to any of the preceding claims, **characterized** in that the switching means (31) comprise series-connected PIN diodes (312 to 314, 316 to 317).

## Patentansprüche

1. Vorrichtung zur Schleifenführung eines HF-Testsignals, das von einem Senderbereich (1A, 1B) in einem Sende-Empfangs-Gerät zu einem Empfängerbereich (10A, 10B) übertragen wird, um das Sende-Empfangs-Gerät zu testen,
dadurch gekennzeichnet,
daß die Vorrichtung folgendes aufweist:
- eine Mischeinrichtung (23, 28), um das Testsignal von einer Sendefrequenz in eine Empfangsfrequenz umzuwandeln;
- eine Schalteinrichtung (31), um das Testsignal vom Ausgang der Mischeinrichtung (23, 28) mit einem Ausgang der Vorrichtung (13) und durch diesen nur während vorbestimmter Testintervalle mit dem Empfängerbereich (10A, 10B)zu verbinden; und
- eine Steuereinrichtung (D1, 35, 36, 38), um den Betrieb der Schalteinrichtung (31) durch Überwachen des Signalpegels an dem Ausgang der Vorrichtung zu überwachen.

2. Vorrichtung nach Anspruch 1,
dadurch gekennzeichnet,
daß die Steuereinrichtung (38) den Betrieb der Mischeinrichtung (23, 28) verhindert, wenn der Signalpegel am Ausgang der Vorrichtung zwischen den Testintervallen einen vorbestimmten Schwellenwert überschreitet.

3. Vorrichtung nach Anspruch 1 oder 2,
dadurch gekennzeichnet,
daß die Steuereinrichtung (38) eine Fehlfunktion der Schalteinrichtung (31) während des Testintervalls und damit einen Ausfall des Tests feststellt, wenn der Signalpegel an dem Ausgang der Vorrichtung während des Testintervalls einen vorbestimmten Schwellenwert unterschreitet.

4. Vorrichtung nach Anspruch 3,
dadurch gekennzeichnet,
daß die Steuereinrichtung (38) einen Fehlerzähler aufweist, der immer dann, wenn der Test nicht bestanden wird, weiterzählt.

5. Vorrichtung nach einem der vorhergehenden Ansprüche,
dadurch gekennzeichnet,
daß die Schalteinrichtung (31) in Reihe geschaltete PIN-Dioden (312 bis 314, 316 bis 317) aufweist.

## Revendications

1. Dispositif pour mettre en boucle un signal de test de la fréquence radio émis par la section d'émission (1A, 1B) d'un émetteur-récepteur vers une section de réception (10A, 10B) en vue de tester l'émetteur-récepteur,
caractérisé en ce que le dispositif comprend
- des moyens mélangeurs (23, 28) pour convertir le signal de test d'une fréquence d'émission en une fréquence de réception,
- des moyens de commutation (31) reliant le signal de test de la sortie des moyens mélangeurs (23, 28) à une sortie du dispositif (13) et par celui-ci, à une section de réception (10A, 10B), seulement à des intervalles de test prédéterminés, et
- des moyens de commande (D1, 35, 36, 38) pour surveiller le fonctionnement des moyens de commutation (31) en contrôlant le niveau du signal présent à la sortie du dispositif.

2. Dispositif selon la revendication 1,
caractérisé en ce que les moyens de commande (38) empêchent le fonctionnement des moyens mélangeurs (23, 28) si le niveau du signal à la sortie du dispositif dépasse une valeur de seuil prédéterminée entre les intervalles de test.

3. Dispositif selon la revendication 1 ou 2,
caractérisé en ce que les moyens de commande (38) détectent un mauvais fonctionnement des moyens de commutation (31) au cours de l'intervalle de test, et ainsi l'échec du test, lorsque le niveau du signal à la sortie du dispositif chute en dessous d'une valeur de seuil prédéterminée au cours de l'intervalle de test.

4. Dispositif selon la revendication 3,
caractérisé en ce que les moyens de commande (38) comprennent un compteur d'erreurs qui est incrémenté à chaque échec du test.

5. Dispositif selon l'une quelconque des revendications précédentes,
caractérisé en ce que les moyens de commutation (31) comprennent des diodes PIN connectées en série (312 à 314, 316 à 317).
